Europäisches Patentamt

European Patent Office

Office européen des brevets

(11) Publication number: **0 235 466**
**B1**

# (12) EUROPEAN PATENT SPECIFICATION

(45) Date of publication of the patent specification:
27.06.90

(51) Int. Cl.⁵: **F16H 47/04**

(21) Application number: **86400386.8**

(22) Date of filing: **24.02.86**

(54) **Hydromechanical transmission.**

(43) Date of publication of application:
**09.09.87 Bulletin 87/37**

(45) Publication of the grant of the patent:
**27.06.90 Bulletin 90/26**

(84) Designated Contracting States:
**DE FR GB IT**

(56) References cited:
**US-A- 3 988 949**

(73) Proprietor: **SHIMADZU CORPORATION, 378, Ichinofunairi-cho Kawaramachi-dori Nijo Sagaru, Nakagyo-ku Kyoto 604(JP)**

(72) Inventor: **Kita, Yasuo, 62-39, Ohtsuka Motoyashiki-cho, Yamashina-ku Kyoto 607(JP)**
Inventor: **Sugawara, Ryosuke, c/o Shimadzu Shuneiryo 18, Shunei-cho, Saiin Ukyo-ku, Kyoto 615(JP)**

(74) Representative: **Rodhain, Claude et al, Cabinet Claude Rodhain 30, rue la Boétie, F-75008 Paris(FR)**

ACTORUM AG

## Description

The present invention relates to a hydromechanical transmission which can be used in various industrial fields as an efficient nonstep continuously variable transmission.

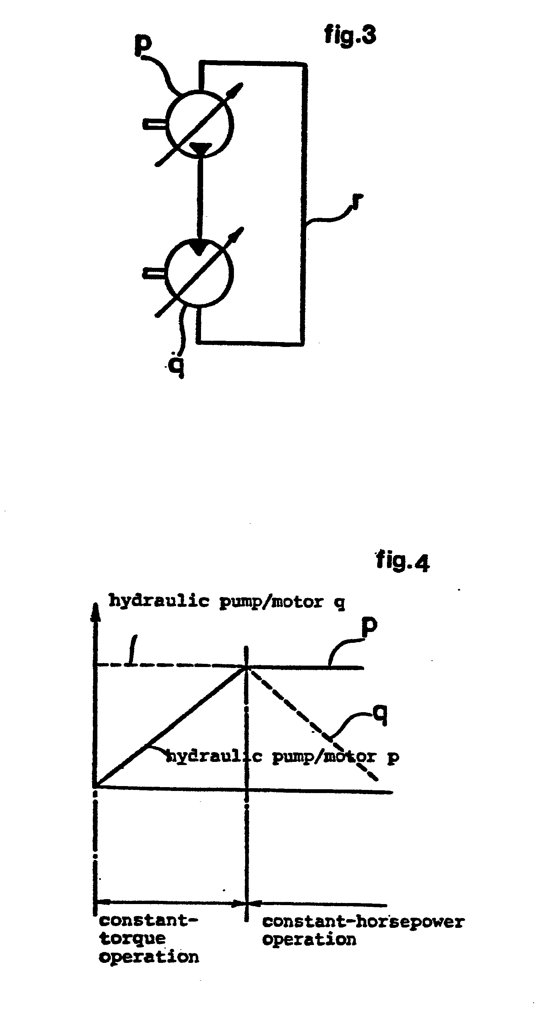

A hydrostatic power transmission which uses a pair of hydraulic pump/motors (reversible hydraulic machines) and is employed as a continuously variable transmission is well-known in the art. Such a transmission presents the advantage of enabling the output speed to be continuously varied. However, where it is used to drive a device to be run at low torque and high speeds, such as a winder or a centrifugal separator, both the hydraulic pump/motors required to have a variable displacement in order to be efficient. A known hydrostatic power transmission used to drive such a device is shown in Fig. 3, where the hydraulic pump/motors p and q of the variable displacement type are connected in series with each other via a hydraulic circuit r. (A booster circuit and other circuits are not represented). Power from a prime mover is applied to one of the hydraulic pump/motor p, and the power delivered from the other pump/motor q can be transmitted to the rotor or a centrigufal separator, the driving wheels of an automobile, or the like. The transmission is controlled as shown in Fig. 4 up to a stationary operation at high-speed so as to improve the efficiency of the system as much as possible.

More specifically, when the system is started, the displacement of the pump/motor q (on the output side) is set at its maximum value, while the displacement of the other pump/motor p (on the input side) is made zero. Then, the displacement of the pump/motor p acting as a pump on the input side is gradually increased. Thus, the hydraulic pump/motor q functioning as a motor on the output side increases its rotational speed while keeping providing a high torque. When the maximum displacement of the pump/motor p on the input side is attained, the control over the displacement of said pump/motor p is stopped. Then, the displacement of the pump/motor q on the output side is gradually reduced. Thus, the rotational speed of said pump/motor q on the output side is increased while the torque is simultaneously decreased until reaching a certain stationary high-speed. In other words, the transmission operates at constant torque and low speeds until the displacement of the pump/motor p (on the input side) attains its maximum value. Thereafter, the displacement of the pump/motor q (on the output side) is controlled, and the transmission is operated at constant power and high speeds. Therefore, the transmission can operate efficiently, taking full advantage of its characteristics.

In general, hydraulic pump/motors of the variable displacement type have many movable parts which are complex in structure and must be precisely machined. Therefore, the structure of the whole transmission is complex and expensive to manufacture, more especially as two such hydraulic pump/motors must be used, and the displacements of the respective pump/motors must be separately controlled. Another disadvantage of the known system results from the fact that hydraulic pump/motors of the variable displacement type generally leak more working fluid than the pump/motors of the fixed displacement type, because they incorporate more sliding and/or rotating seals. Therefore, the variable-displacement type tends to exhibit slightly larger energy loss than the fixed-displacement type. This might adversely affect the efficiency of the whole system.

Various attempts have been made for avoiding there inconveniences, and thus an advantageous device, but somewhat complex and cumbersome namely with regards to its length, is disclosed by the U.S. Patent 3 988 949, which is concerned with a hydromechanical transmission having a differential mechanism having three input/output ends forming either a first low-speed mechanical transmission line between the first and second input/output ends or a second high-speed mechanical line between the first and third input/output ends, a hydraulic power transmission mechanism comprising a pair of hydraulic pump/motors whose respective input/output shafts are connected to the second and third input/output ends, respectively, of the differential mechanism, the pump/motors cooperating with each other to constitute variabel-speed hydraulic power transmission lines, one of the hydraulic pump/motors being of the fixed displacement type and the other pump/motor being of the variable displacement type, and a mode selection mechanism for selecting either a low-speed mode in which the output shaft of the hydromechanical transmission is connected to the input shaft via the first mechanical transmission line, or a high-speed mode in which said output shaft is connected to the input shaft via the second mechanical transmission line.

It is the object of the present invention to provide a hydromechanical transmission completely free of the foregoing problems.

This object is achieved by a hydromechanical transmission comprising a differential mechanism having first, second, third input/output ends and forming either a first low-speed mechanical transmission line between the first and second input/output ends or a second high-speed mechanical line between the first and third input/output ends, a hydraulic power transmission mechanism comprising a pair of hydraulic pump/motors whose respective input/output shafts are connected to said second and third input/output ends, respectively, of said differential mechanism, said pump/motors cooperating with each other to constitute variable-speed hydraulic power transmission lines, one of said hydraulic pump/motors being of the fixed displacement type and the other pump/motor being of the variable displacement type, and a mode selection mechanism for selecting either a low-speed mode in which the output shaft of the hydromechanical transmission is connected to the input shaft via said first mechanical transmission line, or a high-speed mode in which said output shaft is connected to the input shaft via said second mechanical transmission line, hydromechanical transmission characterized in that:
- the input/output shafts are each other juxtaposed on the same side of two pump/motor units,
- the differential mechanism is disposed in the same space for the input/output shafts, and one input/output shaft from a first pump/motor is directly connected to a sun gear of the differential mechanism, while the other pump/motor is connected to a ring gear via a gear line,
- an engine torque transmitted to planetary gears by a shaft which is disposed in alignment to the shaft for input/output to the first pump/motor,
- a low speed gear is mounted on the input/output shaft of the first pump/motor and concentric thereto mounted is the high speed gear which belongs to the gear line to connect the second pump/motor with the ring gear of the differential mechanism wherein the low speed gear and the high speed gear are disposed in parallel,
- a low-speed gear and high-speed gear are respectively engaged to gears and thereby the torque of the gears outputs to the shaft via clutches.

In the low-speed mode, the output is connected to the input through the first low-speed mechanical transmission line, said transmission line being formed between the first and second input/output ends of the differential mechanism. A portion of the power applied is delivered through this line. The remaining power is transmitted toward the output shaft via the hydraulic power transmission line formed by the hydraulic power transmission mechanism. In this case that of the pump/motors which acts as a pump is of variable displacement type, and is varied from zero to its maximum value so that the other pump/motor functioning as a motor increases its rotational speed at a constant high torque. The output shaft of the hydromechanical transmission shows same characteristics.

In the high-speed mode, the output is connected to the input via the second high-speed mechanical transmission line, said line being formed between the first and third input/output ends of the differential mechanism. A portion of the power applied is delivered through this line. The remaining power is transmitted toward the output shaft via the hydraulic power transmission line formed by the hydraulic power transmission mechanism. At this time, the roles of the pump/motors, i.e., functioning as a pump or as a motor, are interchanged. In other words, the pump/motor of the variable displacement type now acts as a pump. Therefore the displacement of the pump/motor of the variable displacement type is reduced from its maximum value toward zero in the manner opposite to the foregoing, so that said pump/motor increases its rotational speed. The output of the hydromechanical transmission shows same characteristics.

Fig. 1 is a flow line diagram of a hydromechanical transmission according to the invention.
Fig. 2 is a graph for illustrating the operation of the transmission shown in Fig. 1.
Fig. 3 is a circuit diagram of a conventional hydrostatic transmission ; and
Fig. 4 is a graph for illustrating the operation of the conventional transmission shown in Fig. 3.

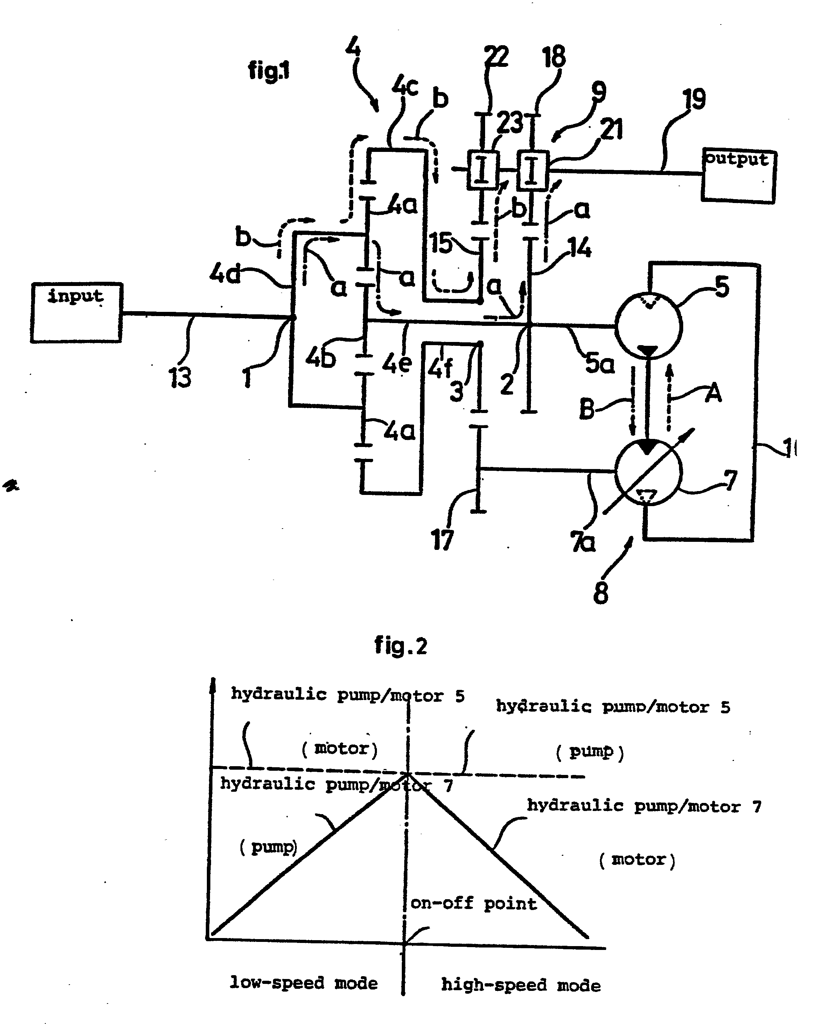

A hydromechanical transmission according to the invention is schematically shown in Fig. 1. The transmission comprises a differential mechanism 4, a hydraulic power transmission mechanism 8, and a mode selection mechanism 9. The differential mechanism 4 presents first, second, third input/output ends 1, 2, 3, respectively, and forms either a first low-speed mechanical transmission line a between the first input/output end 1 and the second input/output end 2 or a second mechanical transmission line b for high speeds between the first end 1 and the thrid end 3. A hydraulic pump/motor 5 of the fixed displacement type comprises an input/output end 5a connected to the second input/output end 2 of the differential mechanism 4. A hydraulic pump/motor 7 of the variable displacement type presents an input/output end 7a coupled to the third input/output end 3. The pump/motors 5 and 7 cooperate with each other to constitute variable-speed hydraulic transmission lines A and B. The mode selection mechanism 9 selects either a low-speed mode, in which the output is connected to the input via the first mechanical transmission line a, or a high-speed mode, in which the output is connected to the input via the second mechanical transmission line b.

The differential mechanism 4 is a planetary gear train consisting of planetary gears 4a circumferentially regularly spaced apart from each other and a sun gear 4b. The planetary gears 4a are in mesh with an outer ring gear 4c. The planetary gears 4a are mounted in a gear carrier 4d. The first input/output end 1 is provided at the center of said carrier 4d, and extends in the form of the transmission input shaft 13. The sun gear 4b is supported on a pivot 4e, which is used as the second input/output end 2. A gear 14 is fixedly secured to said second end 2. The ring gear 4c has a boss 4f that is used as the third input/output end 3. A gear 15 is coupled to said third end 3.

In the hydraulic power transmission mechanism 8, the pump/motor 5 of the fixed displacement type is connected in series with the pump/motor 7 of the variable displacement type via a hydraulic circuit 16, in the same way as in an ordinary hydrostatic power transmission. The input/output shaft 5a of the pump/motor 5 is coupled to the pivot 4e of sun gear 4b. The input/output shaft 7a of the pump/motor 7 is connected to the ring gear 4c by means of a pinion 17.

The mode selection mechanism 9 has a low-speed clutch 21 inserted between a low-speed gear 18 and the output shaft 19 of the transmission. The gear 18 meshes with the gear 14 at the second input/output end 2. The mechanism 9 further comprises a high-speed clutch 23 inserted between a high-speed gear 22 and the output shaft 19, said gear engaging with gear 15 at the third input/output end 3.

In this embodiment, rotary power from an electric motor or the like is applied to the input shaft 13 mounted at the first input/output end 1 of the differential mechanism 4. Then, rotary power is delivered from the output shaft 19 which is connected to the second input/output end 2 or the third input/output end 3 of the differential mechanism 4 via the mode selection mechanism 9. The power may then be transmitted for example to a take-up roller or the like.

In the operation of the hydromechanical transmission constructed as described above, when the low-speed mode is selected, the low-speed clutch 21 is engaged but the high-speed clutch 23 is disengaged. Under the low-speed mode, the output is connected to the input through the low-speed mechanical transmission line a formed between the first end 1 and the second end 2 of the differential mechanism 4. Thus, a portion of the power applied is transmitted to the output shaft 19 via mechanical transmission line a. At this time, the pump/motor 7 of the variable displacement type functions as a pump, while the pump/motor 5 of the fixed displacement type acts as a motor. Accordingly, the rotary power appearing at the third end 3 of the differential mechanism 4 is transmitted to the output shaft 19 via the hydraulic transmission line A that is formed between the pump/motor 7 and the pump/motor 5. In the low-speed mode, as the displacement of the pump/motor 7 is increased, the rotational speed of the output shaft 19 increases relatively to the rotational speed of the input shaft 13. More specifically, when the displacement of the pump/motor 7 of the variable displacement type is zero, the third input/output end 3 of the differential mechanism 4 substantially runs idle. Therefore, the output shaft 19 connected to the second input/output end 2 of the differential mechanism 4 is substantially at a standstill. Then, as the displacement of the pump/motor 7 is increased, the rotational speed at the third end 3 decreases relatively, and the speed at the second end 2 increases relatively, and when the two speeds are equal, the clutch 21 of the mode selection mechanism 9 is disengaged, while the high-speed clutch 23 is engaged to select the high-speed mode.

In the high-speed mode, the mechanical transmission line b is formed between the first end 1 and the third end 3 of the differential mechanism 4 and a portion of the power applied is transmitted to the output shaft 19 via this line b. At this time, the pump/motor 7 of the variable displacement type functions as a motor, while the pump/motor 5 of fixed displacement type acts as a pump. Thus, the rotary power appearing at the second end 2 of the differential mechanism 4 is transmitted to the output shaft 19 via the hydraulic transmission line B that is formed between the hydraulic pump/motor 5 and the hydraulic pump/motor 7. In the high-speed mode, as the displacement of the pump/motor 7 is reduced, the rotational speed of the output shaft 19 increases relative to the rotational speed of the input shaft 13. In other words, as the displacement of the pump/motor 7 is reduced, the speed at the third end 3 increases relatively, while the rotational speed at the second end 2 decreases relatively.

Since the hydromechanical transmission is designed as described thus far, it is capable of providing accelerations with a high torque, in the low-speed mode. On the other hand, in the high-speed mode, it is able to run at high speeds and low torque. Moreover, in such a transmission, the roles of the pump/motors 5 and 7, forming a pair, are interchanged between the low-speed and high-speed modes. For this reason, constant-torque operation can be performed in the low-speed mode and constant-power operation can be effected in the high-speed mode, by means of the structure in which the displacement of pump/motor 7 is made variable, the displacement of the other pump/motor 5 being fixed. Consequently, the transmission requires a much less number of precisely machined parts than the transmission in which both hydraulic pump/motors have a variable displacement. Hence, the novel transmission is simpler in structure and less expensive to manufacture than the conventional transmission. In addition, the control system is simple in structure as well, since one needs only one two-position switch for the clutches 21 and 23 together with the control over the only variable displacement pump/motor 7. Finally, the energy loss which would have been caused by movable seals for varying displacement is halved. In this way, the efficiency of the whole system can be enhanced without introducing difficulties.

## Claim

A hydromechanical transmission comprising a differential mechanism (4) having first, second, third input/output ends (1, 2, 3) and forming either a first low-speed mechanical transmission line (a) between the first (1) and second (2) input/output ends or a second high-speed mechanical line (b) between the first (1) and third (3) input/output ends, a hydraulic power transmission mechanism (8) comprising a pair of hydraulic pump/motors (5, 7) whose respective input/output shafts (5a, 7a) are connected to said second (2) and third (3) input/output ends, respectively, of said differential mechanism (4), said pump/motors (5, 7) cooperating with each other to constitute variable-speed hydraulic power transmission lines (A, B), one (5) of said hydraulic pump/motors being of the fixed displacement type and the other pump/motor (7) being of the variable displacement type, and a mode selection mechanism (9) for selecting either a low-speed mode in which the output shaft (19) of the hydromechanical transmission is connected to the input shaft (13) via said first mechanical transmission line (a), or a high-speed mode in which said output shaft (19) is connected to the input shaft (13) via said second mechanical transmission line (b), hydromechanical transmission characterized in that:
– the input/output shafts (5a, 7a) are each other juxtaposed on the same side of two pump/motors units (5, 7),
– the differential mechanism (4) is disposed in the same space for the input/output shafts and one input/output shaft (5a) from a first pump/motor (5) is directly connected to a sun gear (4b) of the differential mechanism (4), while the other pump/motor (7) is connected to a ring gear (4c) via a gear line (15, 17),
– an engine torque is transmitted to planetary gears (4a) by a shaft (13) which is disposed in alignment to the shaft (5a) for input/output to the first pump/motor (5),
– a low-speed gear (14) is mounted on the input/output shaft (5a) of the first pump/motor (5) and concentric thereto mounted is the high speed gear (15) which belongs to the gear line (15, 17) to connect the second pump/motor (7) with the ring gear (4c) of the differential mechanism wherein the low speed gear (14) and the high speed gear (15) are disposed in parallel,

– a low-speed gear (14) and high-speed gear (15) are respectively engaged to gears (18, 22) and thereby the torque of the gears (18, 22) outputs to the shaft (19) via clutches (21, 23).

**Patentanspruch**

Hydromechanisches Getriebe, bestehend aus einem Differentialmechanismus (4) mit ersten, zweiten, dritten Eingängen/Ausgängen (1, 2, 3), um entweder einen ersten mechanischen Übertragungsweg (a) geringer Geschwindigkeit zwischen den ersten (1) und zweiten (2) Eingängen/Ausgängen oder einen zweiten mechanischen Übertragungsweg (b) hoher Geschwindigkeit zwischen den ersten (1) und dritten (3) Eingängen/Ausgängen bereitzustellen und einem hydraulischen Kraftübertragungsmechanismus (8) bestehend aus einem Elementenpaar Hydraulikpumpe/Motor (5, 7), dessen entsprechende Eingangs-/Ausgangswellen (5a, 7a) jeweils mit den zweiten (2) oder dritten (3) Eingängen/Ausgängen des Differentialmechanismus (4) verbunden sind, wobei sich durch das Zusammenwirken von Pumpe/Motor (5, 7) hydraulische Kraftübertragungswege (A, B) unterschiedlicher Geschwindigkeit festlegen lassen, und ein Element von Pumpe/Motor (5) von einem festsetzbar verschieblichen Bautyp ist, und das andere Element von Pumpe/Motor (7) von einem veränderbar verschieblichen Bautyp ist und ein Mechanismus (9) zur Auswahl der Betriebsweise vorhanden ist, mit dem sich entweder eine Betriebsweise niedriger Geschwindigkeit, bei der die Ausgangswelle (19) des hydromechanischen Getriebes mit der Eingangswelle (13) über den ersten mechanischen Übertragungsweg (a) verbunden ist oder eine Betriebsweise hoher Geschwindigkeit auswählen läßt, bei der die Ausgangswelle (19) mit der Eingangswelle (13) über den zweiten mechanischen Übertragungsweg (b) verbunden ist, wobei das hydromechanische Getriebe dadurch gekennzeichnet ist, daß

– die Eingangs-/Ausgangswellen (5a, 7a) nebeneinanderliegend auf der gleichen Seite der Pumpe/Motoreinheiten (5, 7) angeordnet sind,

– der Differentialmechanismus (4) in gleichem Abstand zu den Eingangs-/Ausgangswellen angeordnet ist und eine Eingangs-/Ausgangswelle (5a) einer ersten Pumpe/Motor (5) unmittelbar mit einem Sonnenrad (4b) des Differentialmechanismus (4) verbunden ist, während die andere Pumpe/Motor (7) mit einem Drehkranz (4c) über eine Zahnradverbindung (15, 17) verbunden ist,

– das Maschinendrehmoment über eine in Verlängerung zu der Welle (5a) für den Eingang/Ausgang der ersten Pumpe/Motor (5) angeordnete Welle (13) auf Planetenräder (4a) übertragen wird,

– ein Zahnrad (14) niedriger Geschwindigkeit auf der Eingangs-/Ausgangswelle (5a) der ersten Pumpe/Motor (5) befestigt ist und konzentrisch hierzu ein Zahnrad (15) hoher Geschwindigkeit befestigt ist, welches der Zahnradverbindung (15, 17) angehört und die zweite Pumpe/Motor (7) mit dem Drehkranz (4c) des Differentialmechanismus verbindet, in dem das Zahnrad (14) für niedrige Geschwindigkeit und das Zahnrad (15) für hohe Geschwindigkeit parallel angeordnet sind,

– und das Zahnrad (14) für niedrige Geschwindigkeit und das Zahnrad (15) für hohe Geschwindigkeit mit entsprechenden Zahnrädern (18, 22) in Eingriff stehen, wodurch das Drehmoment der Zahnräder (18, 22) mittels Kupplungen (21, 23) auf die Welle (19) abgeführt wird.

**Revendication**

1. Transmission hydromécanique comportant un mécanisme différentiel (4) ayant une première, une deuxième et une troisième extrémités d'entrée/sortie (1, 2, 3) et formant soit une première ligne de transmission mécanique basse vitesse (a) entre la première (1) et la deuxième (2) extrémités d'entrée/sortie, soit une deuxième ligne de transmission mécanique haute-vitesse (b) entre la première (1) et la troisième (3) extrémités d'entrée/sortie, un mécanisme de transmission de force motrice hydraulique (8) muni de deux unités hydrauliques pompe/moteur (5, 7) dont les arbres d'entrée/sortie respectifs (5a, 7a) sont respectivement raccordés auxdites deuxième (2) et troisième (3) extrémités d'entrée/sortie dudit mécanisme différentiel (4), lesdites unités pompe/moteur (5, 7) coopérant l'une avec l'autre pour constituer des lignes de transmission hydraulique de force motrice à vitesse variable (A, B), l'une (5) desdites unités hydrauliques pompe/moteur étant du type à volume déplacé fixe et l'autre unité pompe/moteur (7) étant du type à volume déplacé variable, et un mécanisme de sélection de mode (9) pour sélectionner soit un mode basse vitesse dans lequel l'arbre de sortie (19) de la transmission hydromécanique est relié à l'arbre d'entrée (13) par l'intermédiaire de ladite première ligne de transmission mécanique (a), soit un mode haute vitesse dans lequel ledit arbre de sortie (19) est relié à l'arbre d'entrée (13) par l'intermédiaire de la deuxième ligne de transmission mécanique (b), transmission hydromécanique caractérisée en ce que:

– les arbres d'entrée/sortie (5a, 7a) sont juxtaposés l'un à l'autre du même côté des deux unités pompe/moteur (5, 7),

– le mécanisme différentiel (4) est disposé dans le même espace que les arbres d'entrée/sortie et un arbre d'entrée/sortie (5a) d'une première unité pompe/moteur (5) est directement relié à une roue solaire (4b) du mécanisme différentiel (4), tandis que l'autre unité pompe/moteur (7) est reliée à une couronne dentée (4c) par l'intermédiaire d'un train d'engrenages (15, 17),

– un couple moteur est transmis à des engrenages satellites (4a) par un arbre (13) qui est disposé à l'alignement de l'arbre (5a) d'entrée sortie de la première unité pompe/moteur (5),

– un engrenage basse vitesse (14) est monté sur l'arbre d'entrée/sortie (5a) de la première unité pompe/moteur (5), l'engrenage haute vitesse (15) étant monté de façon coaxiale à l'engrenage basse vitesse et faisant partie du train d'engrenages (15, 17) qui relie la deuxième unité pompe/moteur (7) à la couronne dentée (4c) du mécanisme différentiel, l'engrenage basse vitesse (14) et l'engrenage haute vitesse (15) étant disposés en parallèle,

– l'engrenage basse vitesse (14) et l'engrenage haute vitesse (15) engrènent respectivement avec des engrenages (18, 22), le couple des engrenages (18, 22) étant alors transmis à l'arbre (19) par l'intermédiaire d'embrayages (21, 23).

fig.1

fig.2

hydraulic pump/motor 5

( motor)

hydraulic pump/motor 5

( pump)

hydraulic pump/motor 7

hydraulic pump/motor 7

( pump)

( motor)

on-off point

low-speed mode

high-speed mode

**fig.3**

p

r

q

**fig.4**

hydraulic pump/motor q

p

q

hydraulic pump/motor p

constant-
torque
operation

constant-horsepower
operation